Europäisches Patentamt

European Patent Office

Office européen des brevets

(19)

(11) Veröffentlichungsnummer: **0 205 014**

**A2**

## (12) EUROPÄISCHE PATENTANMELDUNG

(21) Anmeldenummer: 86107059.7

(22) Anmeldetag: 23.05.86

(51) Int. Cl.⁴: **H 02 J 9/06**

---

(30) Priorität: 13.06.85 DE 3521164

(43) Veröffentlichungstag der Anmeldung:
17.12.86 Patentblatt 86/51

(84) Benannte Vertragsstaaten:
AT BE DE FR GB NL

(71) Anmelder: CEAG Licht- und Stromversorgungstechnik
GmbH
Senator-Schwartz-Ring 26
D-4770 Soest(DE)

(72) Erfinder: Klaas, Wilfried, Ing.-grad.
Jägerstr. 12
D-4773 Möhnesee 13(DE)

(72) Erfinder: Scharfenberg, Manfred, Ing.-Grad.
Hollohweg 81
D-4750 Unna(DE)

(74) Vertreter: Kempe, Wolfgang, Dr. et al,
c/o Brown, Boveri & Cie AG Postfach 351
D-6800 Mannheim 1(DE)

(54) Überwachungseinrichtung.

(57) Eine Notstromversorgungeinrichtung besitzt eine Batterieeinheit, eine Umschalteinrichtung zum Umschalten von Netz- auf Batteriebetrieb bei einem Netzausfall bzw. bei Absinken der Netzspannung. Um zu verhindern, daß die einzelnen Verbraucher auf Funktionsfähigkeit durch Abgehen bzw. in Augenscheinnahme überprüft werden müssen, weswegen die Überwachung kompliziert war, ist neuerdings die Batterieeinheit eine Zentralbatterie (10) für den Betrieb einer Vielzahl von parallelen Verbrauchern (27, 28), wobei jedem Verbraucher (27, 29; 28) eine Überwachungseinrichtung (30, 31) zugeordnet ist. Die Signale der Überwachungseinrichtung werden mittels einer Datenleitung ($26_1....26_N$) für jeweils einen oder mehrere Verbraucher einer zentralen Prüf- und Auswerteinheit (33) zugeführt.

EP 0 205 014 A2

./...

Croydon Printing Company Ltd

C E A G   Licht-  und  Stromversorgungstechnik  G m b H
Soest                                      11.  Juni 1985
Mp.-Nr.  569/85                            ZPT/P4 - Ft/Sd

## Überwachungseinrichtung

Die Erfindung betrifft eine Notstromversorgungseinrichtung nach dem Oberbegriff des Anspruches 1 sowie ein Verfahren, mit dem diese Notstromversorgungseinrichtung betrieben wird.

Bei bekannten Notstromversorgungseinrichtungen besteht das Problem, daß die einzelnen Verbraucher, insbesondere Notleuchten bzw. Sicherheitsleuchten und dergleichen während eines Netzausfalls von einer Batterie zuverlässig in Betrieb gehalten werden müssen. In der Vergangenheit erfolgte die Überprüfung der Verbraucher auf Funktionsfähigkeit durch Abgehen bzw. durch Inaugenscheinnahme.

Aufgabe der Erfindung ist es, eine Vorrichtung und ein Verfahren zur Benutzung der Vorrichtung anzugeben, bei dem eine zentrale Überwachung und eine Zentralbatterie vorhanden ist.

Diese Aufgabe wird erfindungsgemäß gelöst durch die
kennzeichnenden Merkmale des Anspruches 1.

Das Verfahren, nach dem diese Notstromversorgungseinheit
betrieben wird, ist den Merkmalen des Anspruches 4 zu
entnehmen.

Weitere vorteilhafte Ausgestaltungen der Erfindung sind
den Unteransprüchen zu entnehmen.

Aufgrund der erfindungsgemäßen Einrichtung ist es erstmals möglich, eine Zentralbatterie vorzusehen, darüberhinaus auch zu erreichen, daß die einzelnen Verbraucher
nicht mehr durch Inaugenscheinnahme überprüft werden
müssen, sondern daß die Funktionsfähigkeit jedes einzelnen Verbrauchers durch zentrale Steuerung, Auswertung
und Protokollierung der einzelnen Tests an einer zentralen Stelle angezeigt bzw. protokolliert wird.

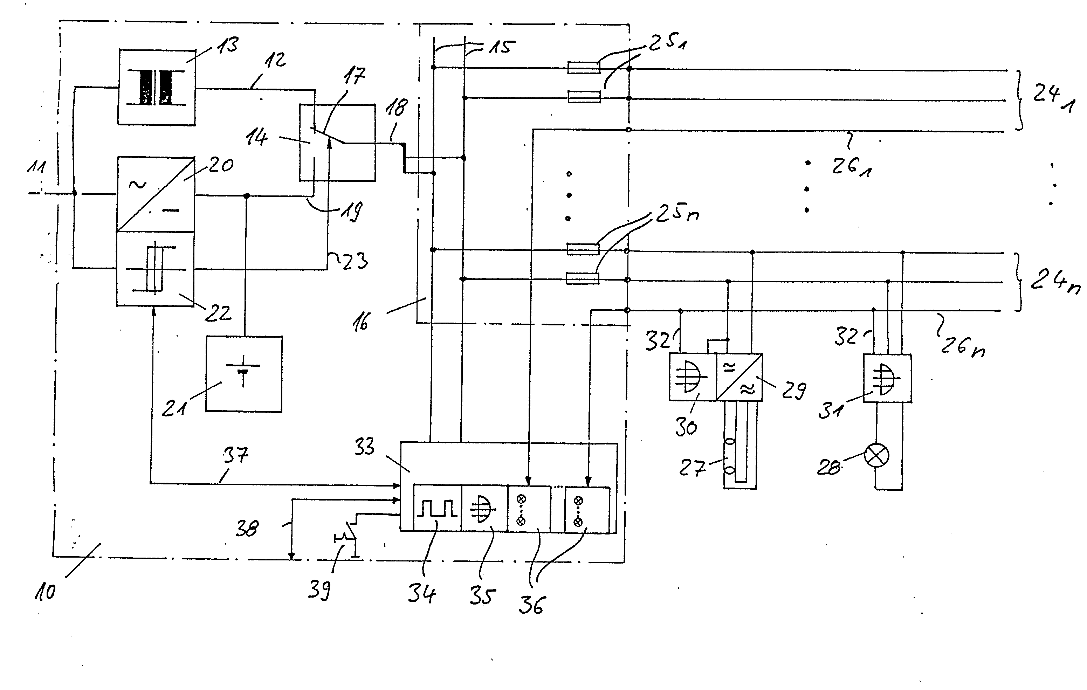

Anhand der Zeichnung, in der ein Ausführungsbeispiel der
Erfindung dargestellt ist, soll die Erfindung näher erläutert und beschrieben werden.

Es zeigt: die einzige Figur eine schematisch Darstellung
          einer Schaltungsanordnung einer erfindungsgemäßen Notstromversorgungseinrichtung.

Die Notstromversorgungseinrichtung besitzt eine Zentraleinheit 10, die über eine Zuführung 11 an der allgemeinen Stromversorgung (Netz) angeschlossen ist. Über eine
Versorgungsleitung 12 mit einem Transformator 13, der
dann nicht erforderlich ist, wenn die Netzspannung
gleich ist der Batteriespannung, und über eine Umschaltanordnung 14 wird der Strom der allgemeinen Versorgung einer Sammelschiene 15 zugeführt, die in einer Verteilung 16 untergebracht ist. Die Umschalteinrichtung 14 besitzt einen Umschalter 17, mit dem der mit den Sammelschienen 15 verbundene Ausgang 18 der Umschalteinrichtung einmal mit der Versorgungsleitung 12 und zum anderen mit einer weiteren Leitung 19 verbindbar ist, die einerseits mit einem Ladeteil 20 und andererseits mit einem Akkumulatorensatz 21 verbunden ist. Über die Netzversorgung 11 wird eine Steuereinrichtung 22 mitversorgt, die über eine Signalleitung 23 die Umschalteinrichtung 14 aus der in der Figur gezeichneten Stellung in die strichlierte Stelle umschaltet, mit der die Batterie 21 mit der Verbindungsleitung 18 verbindbar sind.

An die Sammelschienen 15 innerhalb der Verteilung 16 sind mehrere Stromkreise $24_1$ bzw. $24_n$ verbunden, wobei in diesen Stromkreisen jeweils Sicherungen $25_1$ bzw. $25_n$ angeordnet sind. Den einzelnen Stromkreisen ist jeweils eine Datenleitung $26_1$ bzw. $26_n$ zugeordnet.

Über die einzelnen Stromkreise $24_1$ bzw. $24_n$ werden Verbraucher 27 bzw. 28 mit Strom versorgt. Der Verbraucher 27 ist eine Leuchtstofflampe und demgemäß ist dem Verbraucher 27 ein Wechselrichter 29 vorgeschaltet, der sowohl für Speisung mit Wechselstrom als auch für Gleichstrom geeignet ist. Der Verbraucher 28 ist eine Glühlampe, weswegen ein Wechselrichter nicht erforderlich ist.

Den Verbrauchern 27 und dem Wechselrichter 29 bzw. dem Verbraucher 28 ist jeweils eine Überwachungseinrichtung 30 bzw. 31 zugeordnet, deren Ausgangssignal über einen Verbindungsleiter 32 der Datenleitung $26_1$ bzw. $26_n$ zugeführt wird (in der einzigen Figur ist die Verbindungs leitung 32 mit dem Datenleiter $26_n$ verbunden). Die Datenleiter $26_1$ bzw. $26_n$ sind mit einer Auswerte- und Prüfeinrichtung 33 verbunden, die einen Impulsgeber 34, eine Überwachungseinrichtung 35 und eine Anzeigeeinrichtung 36 aufweist. Zur Stromversorgung dient die Sammelschiene 15.

Über den Impulsgeber 34 wird in regelmäßigen Abständen ein Netzausfall simuliert, der über eine Verbindungsleitung 37 der Steuereinrichtung 22 zugeführt wird, mit der die Umschalteeinrichtung 14 betätigt wird, so daß die Batterie 21 zur Versorgung der Verbraucher 27/28 herangezogen wird. Die Überwachungseinrichtungen 30 und 31 überwachen sowohl den Wechselrichter 29 und die Leuchtstofflampe 27 als auch die Glühlampe 28, und das Prüfergebnis, dessen Signale über die Datenleitung $26_n$ an die Prüfeinrichtung 33 gegeben wird, wird an der Anzeigeeinrichtung 36 angezeigt. Zu Beginn der Test- bzw. Prüfzyklen werden zunächst die Datenleitungen auf Unterbrechung und Kurzschluß geprüft. Danach wird jede der einzelnen Überwachungseinrichtungen 30 und 31 angefragt, wobei die Signale "fehlerfreier Betrieb" bzw. "Fehler" erfaßt und verarbeitet werden. Dabei kann das Ergebnis entweder optisch oder bleibend durch Druck angezeigt bzw. protokolliert werden. Es besteht auch die Möglichkeit, die Prüfeinrichtung 33 über Datenleitungen 38 (siehe Figur) mit zentralen Überwachungseinrichtungen wie z.B. im Bereich der Gebäudeleittechnik zu verbinden.
Zusätzlich kann, wie in der Figur gleichfalls dargestellt, auch ein Tastschalter 39 vorgesehen sein, um damit manuell einen Prüfzyklus an der Zentraleinheit 10 auszulösen.

Ansprüche

1. Notstromversorgungseinrichtung mit einer Batterieeinheit, einer Umschalteinrichtung zum Umschalten von Netz- auf Batteriebetrieb bei einem Netzausfall bzw. bei Absinken der Netzspannung, dadurch gekennzeichnet, daß die Batterieeinheit eine Zentralbatterie (10) für den Betrieb einer Vielzahl von parallelen Verbrauchern (27, 28) ist, und daß jedem Verbraucher (27, 29; 28) eine Überwachungseinrichtung (30; 31) zugeordnet ist, deren Signale mittels einer Datenleitung ($26_1...26_n$) für jeweils einen oder mehrere Verbraucher einer zentralen Prüf- und Auswerteinheit (33) zuführbar sind.

2. Notstromversorgungseinrichtung nach Anspruch 1, dadurch gekennzeichnet, daß jede Datenleitung ($26_1...26_n$) eine zusätzliche Ader in einem Stromkreis zur Versorgung der einzelnen Verbraucher ist, deren elektrische Rückführung durch eine der Leitungen der Stromkreise ($24_1...24_n$) gebildet ist.

3. Notstromversorgungseinrichtung nach einem der Ansprüche 1 und 2, dadurch gekennzeichnet, daß die Prüf- bzw. Auswerteeinheit (33) einen Impulsgeber (34) aufweist, der eine Steuereinrichtung (22) zur Betätigung der Umschalteinrichtung (14) zur Simulierung eines Netzausfalles ansteuert.

1/1
0205014